# EUROPÄISCHE PATENTSCHRIFT

(11) **EP 3 313 608 B1**
(45) Veröffentlichungstag und Bekanntmachung des Hinweises auf die Patenterteilung: **14.08.2019**
(21) Anmeldenummer: 16724005.0
(22) Anmeldetag: 28.06.2016
(51) Int. Cl.: B23K 26/352, B23K 26/00, B23K 26/0622, B23K 26/53, B23K 103/00

(54) **VERFAHREN ZUR ERZEUGUNG VON MODIFIKATIONEN IN ODER AN EINEM MEHRPHASIGEN TRANSPARENTEN WERKSTÜCK MITTELS LASERBEARBEITUNG ; MEHRPHASIGER KOMPOSITWERKSTOFF**
METHOD FOR PRODUCING MODIFICATIONS IN OR ON A MULTI-PHASE TRANSPARENT WORKPIECE BY MEANS OF LASER PROCESSING; MULTI-PHASE COMPOSITE MATERIAL
PROCÉDÉ PERMETTANT DE GÉNÉRER DES MODIFICATIONS DANS OU SUR UNE PIÈCE TRANSPARENTE POLYPHASÉE AU MOYEN D'UN USINAGE LASER, ET MATÉRIAU COMPOSITE POLYPHASÉ

(30) Priorität: 29.06.2015 DE 102015110422
(43) Veröffentlichungstag der Anmeldung: 02.05.2018
(73) Patentinhaber: SCHOTT AG, 55122 Mainz (DE)
(72) Erfinder: ORTNER, Andreas, 55435 Gau-Algesheim (DE); BISCH, Niklas, 55296 Lörzweiler (DE); WAGNER, Fabian, 55118 Mainz (DE); SEIDL, Albrecht, 63843 Niedernberg (DE); LENTES, Frank-Thomas, 55411 Bingen (DE)
(74) Vertreter: Blumbach · Zinngrebe Patentanwälte PartG mbB
(86) Internationale Anmeldenummer: PCT/EP2016/060742
(87) Internationale Veröffentlichungsnummer: WO 2017/001102

(56) Entgegenhaltungen:
- WO-A1-2012/073153
- WO-A1-2014/111385
- DE-A1-102012 110 971
- US-A1- 2013 280 449

## Beschreibung

Die Erfindung betrifft ein Verfahren zur effizienten Erzeugung von Modifikationen in oder an einem mehrphasigen transparenten Material, insbesondere mit Hilfe eines Kurz- bzw. Ultrakurzpuls-Lasers und einen Kompositwerkstoff entsprechend dem Oberbegriff der Ansprüche 1 und 10 (siehe, z.B. US 2013/280449 A1).

Ein solches Verfahren kann zur effizienten lokalen Modifizierung des Werkstücks bzw. seiner Materialeigenschaften eingesetzt werden, wie auch der Kompositwerkstoff entsprechend lokal effizient modifiziert werden kann. Insbesondere kann ein solches Verfahren zur effizienten Erzeugung von entlang einer vorgegebenen Kontur aufgereihten linienhaften Modifikationen eingesetzt werden, wie auch in dem Kompositwerkstoff solche linienhaften Modifikationen effizient erzeugt werden können. Das Verfahren eignet sich dann zum Trennen des Werkstücks, wie auch der Kompositwerkstoff entsprechend einfach getrennt werden kann.

Generell stehen zur Erzeugung von Modifikationen in oder an transparenten Materialien mit Hilfe von Laserstrahlung zahlreiche verschiedene Möglichkeiten zur Verfügung.

Die JP002011147943A beschreibt beispielsweise die Unterdrückung thermischer Effekte bei der Laserbearbeitung von Substraten. Dazu wird endseitiger Teil eines Substrats mittels eines Bessel-Strahls laserbearbeitet.

Auch im speziellen Fall linienhafter Modifikationen, das heißt im Falle der gewünschten Erzeugung linien- oder fadenförmiger Defekte, stehen bereits eine Reihe von Techniken zur Verfügung.

In "Femtosecond filamentation in transparent media",A. Couairon, A. Mysyrowicz, Physics Reports Vol. 441, Issues 2-4, March 2007, Pages 47-189 werden die wesentlichen Mechanismen bei der Ausbildung der Filamentierung ultrakurzer Laserpulse in verschiedenen transparenten Medien beschrieben.

Auch aus der WO 2012/006736 A2 ist bekannt, dass man unter Ausnutzung nichtlinearer optischen Eigenschaften transparenter Werkstoffe (u.a. des elektrooptischen Kerr-Effekts und Mehrphotonen-Absorption) durch Einkopplung von Laserstrahlung ausreichender Strahlungsintensität (> 10¹² W/m²) Modifikationen im Glas in Form permanenter linien- bzw. fadenförmiger Defekte bzw. Schädigungen erzeugen kann. Die Aneinanderreihung solcher linienhaften Schädigungen in Glas durch eine sich zeitlich und räumlich verändernde Lasereinstrahlung (z.B. entlang einer Kontur auf der Oberfläche eines Werkstücks) ermöglicht im Werkstück räumlich ausgedehnte Modifikationen. Diese können - bei geeigneter Lage und Ausbildung - auch das Trennen von transparenten Substraten erlauben.

Die dazu benötigten hohen linienförmigen Strahlungsintensitäten können mit Hilfe verschiedener physikalischer Effekte generiert werden: eine Möglichkeit ist die Ausbildung eines "echten" Filaments, ein durch die Laserstrahlung durch Kerr-Effekt und Plasma-Defokussierung selbst geschaffener Wellenleiter mit einem Durchmesser von ca. 1 µm und einer bestimmten Länge ("Soliton"); die andere Möglichkeit ist die gezielte, deterministische Erzeugung einer linien- bzw. fadenförmiger Intensitätsverteilung mit Hilfe einer strahlformenden Optik, wobei der Durchmesser der Intensitätsverteilung durch die nichtlineare Wechselwirkung mit der Laserstrahlung noch wesentlich verkleinert wird.

Ein Filament stellt einen sich selbst stark verengenden und über einen im Vergleich zum Durchmesser des Filaments sehr lang propagierenden Laserstrahl hoher Intensität dar und entsteht durch einen oder mehrere kurze oder ultrakurze Laserpulse ausreichender Leistung durch nichtlineare Wechselwirkung des Strahls mit dem Medium. Oft wird auch die hierdurch verursachte linienhafte, bleibende Modifikation, wie etwa eine Brechzahländerung oder die linienhafte, bleibende Schädigungszone im Material als "Filament" bezeichnet.

Die zugehörige Laser-Technologie wird auch als Ultra-Short-Pulse-(USP)- Technologie bzw. als Ultrakurzpuls-LaserTechnik bezeichnet. Dabei erfährt der Laserstrahl im Inneren des Glases infolge der durch den Kerr-Effekt bewirkten lokalen Erhöhung des Brechungsindex eine Selbstfokussierung, wodurch die Intensität immer weiter ansteigt, was wiederum zu einer lawinenartigen Freisetzung von Elektronen führen kann, bis die Elektronendichte in einem Punkt so hoch wird, dass die dadurch verursachte Änderung der lokalen komplexen Permittivität des Materials zu einer Verringerung des Brechungsindex als auch zu einer Erhöhung der Absorption führt. Im Extremfall kommt es zu einer Plasmaexplosion, bei der das Glas durch die absorbierte Laserenergie irreversible Schäden rund um die Plasmaentstehungsstelle erleiden kann. Die Verringerung des Brechungsindexes führt zu einer Defokussierung der Reststrahlung. Nach der Defokussierung des Reststrahls kann es zu einer erneuten Fokussierung kommen, welche wiederum in einem Kollaps mit einhergehender Freisetzung von Leitungselektronen endet. Dies wird als Refokussierungszyklus bezeichnet. Dieser Effekt wiederholt sich je nach Pulsleistung ggf. mehrfach, solange ausreichend Energie vorhanden ist.

Die Leistung des filamentartig propagierenden Laserstrahls nimmt entlang des Filaments ab. So absorbieren die ersten Plasmaspots die größte Energie und erzeugen auch die größten Schädigungen. Die Refokussierungszyklen sind aufgrund der stattfindenden Energiedissipation nur über begrenzte Längen möglich.

Ein solches als Filamentierung bezeichnetes Einbringen von Defekten in Glas und Glaskeramik wird auch in der DE 10 2012 110 971 A1 beschrieben.

Aus der WO 2014/111385 A1 ist bekannt, dass derartige linienhafte, bleibende Modifikationen in transparenten Werkstoffen wie Glas mittels geeigneter Einkopplung von Kurz- und Ultrakurzpulslaserstrahlung auch dadurch erzeugt werden können, dass durch geeignete Strahlformung der Laserstrahl nicht auf einen (nahezu) punktförmigen Fokusbereich fokussiert wird, sondern vielmehr auf eine "Fokuslinie" bestimmter Länge. Im Unterschied zu einem echten Filament, bei welchem der stark verengte, Laserstrahl entlang der Filamentlinie propagiert, dabei an Leistung verliert und sich schließlich (mit stark reduzierter Restleistung) wieder aufweitet, erfolgt bei der Ausbildung einer Fokuslinie die Einstrahlung entlang der Linie kontinuierlich radial mit einem Einfallswinkel von weniger als 90° in Richtung der optischen Achse. Dies kann, wie in verschiedenen Ausführungsbeispielen der WO 2014/111385 A1 beschrieben, z.B. durch Linsen oder Linsensysteme erfolgen, bei denen der Fokusabstand mit dem Strahlradius variiert, oder auch durch Verwendung konisch geschliffener Linsen (Axikons), welche Punktstrahlquellen auf eine Linie abbilden. Auch in diesen Fällen kann es bei geeigneter Strahlformung und ausreichender Strahlleistung im Bereich der Fokuslinie durch nichtlineare Wechselwirkung mit dem Medium zu dauerhafter Modifizierung bzw. Schädigung des Materials kommen. Die Aneinanderreihung solcher linienhaften Schädigungen in Glas durch eine sich zeiträumlich verändernde Lasereinstrahlung (z.B. entlang einer Linie auf der Oberfläche eines Werkstücks) ermöglicht auch in diesem Fall im Werkstück räumlich ausgedehnte Modifikationen. Diese können - bei geeigneter Lage und Ausbildung - auch in diesem Fall das Trennen von transparenten Substraten erlauben. Da ein signifikanter Anteil der Laserstrahlung seitlich/radial - und nicht wie bei der echten Filamentation im sich ausbildenden Filament nahezu nur in Richtung der optischen Achse - zugeführt wird, können so in dielektrischen Festkörpern wie Glas bedeutend längere Schädigungslinien ohne zu starke Schwächung des Laserstrahls erzeugt werden.

Aus der KR 2014-0072448 (A) ist ebenfalls eine Vorrichtung zum Schneiden von Glas mittels eines Axikon als optischem Element bekannt, bei welcher das Glas mit einem Laserstrahl bestrahlt wird. Mittels einer kollimierenden Linse innerhalb des Laserstrahls und der genannten Axikons wird ein Strahl mit einem Mehrfach-Fokus erzeugt. Das Glas wird innerhalb des Fokusbereichs angeordnet.

Weiter ist bekannt, dass mittels "einfacher" Fokussierung geeigneter Laserstrahlung ausreichender Leistung auf oder in ein Medium (d.h. ohne Abbildung des Strahls auf eine Fokuslinie, ohne Ausbildung eines filamentartig propagierenden Strahls) durch nichtlineare Wechselwirkung mit dem Medium räumlich lokalisierte Modifikationen bzw. Schädigungen im Medium erzeugt werden können. Dies wird bei allen Formen der Laser-Ablation bei der Bearbeitung von Oberflächen ausgenutzt, oder auch bei der Einbringung von gezielten, punktförmigen Veränderungen innerhalb eines transparenten Materials ("Laser-Scribing"), oder auch beim Punktschweißen zweier aufeinander gelegter, transparenter Werkstücke, z.B. zweier Glasplatten. Auch ist es möglich, eine Vielzahl solcher Fokuspunkte nacheinander zu modifizieren, so dass eine perlenkettenartige Aneinanderreihung von Modifikationen bzw. Schädigungen entlang einer Linie vorliegt. Ein solches Verfahren ist z.B. in der US 2005/173387 A1 beschrieben.

Es ist weiterhin aus "Femtosecond laser-induced color change and filamentation in Ag+-doped silicate glass", H.Sun et al., Chinese Optics Letters, Vol. 7 Issue 4, pp. 329-331 (2009) bekannt, mit Laserbestrahlung Farbänderungen und multiple Filamentierung in Gläsern zu erzielen.

Strukturänderungen in Glaskeramik können auch reversibel sein. Dieser Effekt wird in "On the Reversibility of Laser-induced Phase-structure Modification of Glass-ceramics", Journal of Laser Micro/Nanoengineering, Vol. 1 Nr. 2, 2006 beschrieben.

Bei Glaskeramik handelt es sich um einen Werkstoff, der eine amorphe Glasphase und mindestens eine Kristallphase aufweist. Der Herstellungsprozess von Glaskeramiken beginnt mit einem sogenannten Grünglas, das einer speziellen Temperaturbehandlung unterzogen wird, wobei eine Teilkristallisation, die Keramisierung genannt wird, stattfindet. Dabei bilden sich im glasigen Material einzelne, fein verteilte Kristalle. Dieser Umwandlungsprozess des Materials lässt sich in eine Keimbildung und das anschließende Kristallwachstum an dem Kristallisationskeim unterteilen. Zur Keimbildung werden dem Grünglas absichtlich Verunreinigungen hinzugegeben. Diese fallen bei Erwärmung aus und wirken als Kristallisationskeime. Beim Keramisieren müssen beide Vorgänge, die möglichst gleichmäßig verteilte und dichte Keimbildung und das Kristallwachstum, aufeinander abgestimmt sein. Dies lässt sich über die Temperatur steuern.

Strukturelle Änderungen von Glaskeramik nach Laserbestrahlung sind aus dem Artikel "Structure and properties of glass ceramics after laser treatment", Glass and Ceramics Vol. 56, Issue 5-6 (1999), 144 - 148 bekannt.

Wesentliche Eigenschaften einer Glaskeramik werden durch das Volumenverhältnis von amorpher zu kristalliner Phase bestimmt, zudem aber auch durch die Tatsache, dass sich in der Glaskeramik auch die ursprünglichen Keime befinden, welche sich in ihrer Zusammensetzung von der aufwachsenden kristallinen Phase unterscheiden. Streng genommen ist die Glaskeramik somit mindestens dreiphasig. Die verschiedenen Phasen der Glaskeramik zeichnen sich durch eine unterschiedliche Dielektrizitätszahl aus. Dies hat Auswirkung auf die Lichtgeschwindigkeit in der Glaskeramik, da die Lichtgeschwindigkeit in einem Medium unter anderem von der Größe der Dielektrizitätszahl abhängt.

Es ist ferner allgemein bekannt, dass es bei Blaseneinschlüssen in Glas zur Plasmabildung kommen kann, wenn ein Laserstrahl auf die Grenzfläche Glas-Luft trifft. Hierbei handelt es sich jedoch eher um eine störende Erscheinung.

Der vorliegenden Erfindung liegt die Aufgabe zugrunde, ein gattungsgemäßes Verfahren bzw. einen gattungsgemäßen Kompositwerkstoff dahingehend weiterzuentwickeln, dass Materialmodifikationen ausreichender Größe, Stärke bzw. Schädigung erhalten werden. Ein Aspekt der Aufgabe ist es demnach, Materialmodifikationen auf effiziente Weise zu erzeugen.

Beispielsweise können linienhafte Materialmodifikationen ausreichender Länge gewünscht sein, um damit ein nachfolgendes Trennen (z.B. durch das Aufbringen einer Biegespannung) des Werkstücks entlang einer Linie von nebeneinander eingefügten Modifikationslinien zu erleichtern. In diesem beispielhaften Fall können diese linienhaften Materialmodifikationen sowohl durch einen filamentartig propagierenden Laserstrahl als auch durch einen auf eine Fokuslinie abgebildeten Laserstrahl oder auch durch eine linienhafte Aneinanderreihung von Fokuspunkten erzeugt werden.

Das Verfahren zur Erzeugung von Modifikationen in oder an einem transparenten Werkstück und der Kompositwerkstoff entsprechend der Erfindung sind in den Ansprüchen 1 und 10 definiert.

Bei dem erfindungsgemäßen Verfahren werden in oder an einem transparenten Werkstück Modifikationen mittels einer Laserbearbeitungsvorrichtung erzeugt.

Dabei wird eine Laserbearbeitungsvorrichtung verwendet, die einen Kurzpuls- oder Ultrakurzpulslaser, der eine Laserstrahlung mit einer Wellenlänge im Transparenzbereich des Werkstücks ausstrahlt, und eine Strahlformungsoptik zur Strahlformung, insbesondere zur Fokussierung der Laserstrahlung aufweist.

Insbesondere wird dabei ein transparentes Werkstück verwendet wird, das aus einem Material besteht, welches mehrere Phasen aufweist, von denen zumindest zwei Phasen unterschiedliche Dielektrizitätszahlen besitzen, von denen wiederum die eine Phase eine in Form von Partikeln eingeschlossene Phase ist, die von der anderen Phase umgeben oder zumindest im Wesentlichen umgeben ist, und wobei das Produkt aus dem in Kubiknanometern angegebenen Volumen der Partikel und dem Verhältnis des Betrages der Differenz der zwei unterschiedlichen Dielektrizitätszahlen zu der Dielektrizitätszahl der umgebenden Phase größer als 500, vorzugsweise größer als 1000, besonders bevorzugt größer als 2000 ist.

Das erfindungsgemäße Verfahren ermöglicht es überraschend, dass die Modifikationen in oder an dem transparenten Werkstück eine größere Ausdehnung erreichen, als an einem Werkstück aus dem gleichen Material, welches keine in Form von Partikeln eingeschlossene Phase aufweist.

Bei dem Verfahren wird ein Werkstück verwendet, das aus einem Material besteht, welches mehrere Phasen aufweist. Zumindest zwei dieser Phasen besitzen voneinander unterschiedliche Dielektrizitätszahlen. Die eine der beiden Phasen wird hierbei in Form von Partikeln von der anderen Phase eingeschlossen bzw. im Wesentlichen umgeben. Ferner ist das Produkt aus dem in Kubiknanometern angegebenen Volumen der Bereiche der eingeschlossenen Phase und dem Verhältnis des Betrages der Differenz der zwei unterschiedlichen Dielektrizitätszahlen zu der Dielektrizitätszahl der umgebenden Phase größer als 500, vorzugsweise größer als 1000, besonders bevorzugt größer als 2000.

Dies kann auch so ausgedrückt werden, dass das Produkt aus dem um eins verminderten Verhältnis der zwei unterschiedlichen Dielektrizitätszahlen und dem in Kubiknanometern angegebenen Volumen der Partikel größer als fünfhundert, vorzugsweise größer als eintausend, besonders bevorzugt größer als zweitausend ist, wobei das Verhältnis der zwei unterschiedlichen Dielektrizitätszahlen größer als eins ist.

Der beschriebene Zusammenhang kann auch in folgender Formel ausgedrückt werden: (Partikelvolumen/nm³) • (|Δεᵣ|/εᵣ) > x mit × ∈ {500, 1000, 2000}, mit εᵣ als Dielektrizitätszahl der einen Phase, vorzugsweise eines glasigen Mediums, beziehungsweise der Restglasphase, und |Δεᵣ| dem Betrag der Differenz der Dielektrizitätszahlen des glasigen Mediums und der eingeschlossenen Phase.

Das angegebene Volumen der Partikel bezieht sich nicht auf das Gesamtvolumen aller Partikel, sondern auf das Volumen eines der Partikel; es kommt hierbei insbesondere ein Durchschnitt, z.B. auch über zumindest 50 Prozent der Partikel, oder auch ein Median in Betracht, wie weiter unten ausgeführt ist.

Bei dem Material des Werkstücks kann es sich insbesondere um Glaskeramik, aber auch um Kompositwerkstoffe handeln. Bei der eingeschlossenen Phase kann es sich insbesondere um eine kristalline Phase handeln. Die Bereiche der von einer anderen Phase im Wesentlichen umgebenen, eingeschlossenen Phase, bei denen es sich insbesondere um fertig gewachsene Kristalle in Glaskeramik handeln kann, werden als Partikel bezeichnet.

Es hat sich dabei überraschend gezeigt, dass gerade Glaskeramiken auf die Einwirkung hochenergetischer Laserpulse erheblich anders reagieren als das Grünglas, aus welchem die Glaskeramik gefertigt wird.

Insbesondere hat sich gezeigt, dass in einem derartigen mehrphasigen Werkstück mit einer bestimmten Laserleistung eine Schädigung bzw. Defekt erzeugt werden kann, welche erheblich größeren Ausmaßes ist als bei einem einphasigen Werkstück aus dem gleichen Material bei derselben Laserleistung. Insofern ermöglicht es das erfindungsgemäße Verfahren, in einem mehrphasigen Werkstück bei im Vergleich zur Bearbeitung eines einphasigen Werkstücks gleichbleibender Laserleistung Modifikationen größeren Ausmaßes zu erzeugen oder aber in einem mehrphasigen Werkstück bei gegenüber der Bearbeitung eines einphasigen Werkstücks verminderter Laserleistung Modifikationen in einer vergleichbaren Größe zu erzeugen.

In einer Weiterbildung der Erfindung werden in einem transparenten Werkstück entlang einer Linie nebeneinander aufgereihte linienhafte Materialmodifikationen hergestellt. Dazu wird die mittels der Strahlformungsoptik geformte, vorzugsweise fokussierte Laserstrahlung relativ zu dem Werkstück bewegt, um linienhafte Modifikationen im Werkstück entlang der Bewegungsrichtung herzustellen. Jede linienhafte Modifikation wird durch mindestens einen Laserpuls erzeugt. Es können auch mehrere Pulse nacheinander an einem Ort erfolgen, bzw. aufeinanderfolgende Laserpulse können auch in Form von Bursts abgegeben werden.

Im Falle einer Filamentierung des Materials können die linienhaften Materialmodifikationen jeweils einen in der Regel mindestens 500 Mikrometer langen Kanal, typischerweise mit einem Durchmesser von etwa 1 Mikrometer, von Defekten darstellen.

Der Pfad, beziehungsweise die Linie, entlang derer die linienhaften Modifikationen nebeneinander aufgereiht werden, kann geradlinig, krumm und/oder auch gewinkelt sein, beziehungsweise Ecken aufweisen.

Das erfindungsgemäße Verfahren kann - abgesehen von der Erzeugung linienhafter Modifikationen - auch dazu verwendet werden, Modifikationen an der Oberfläche des transparenten Werkstücks zu erzeugen. Dazu wird mittels der Laserstrahlung Material von der Oberfläche abgetragen. Darunter fällt zum Beispiel das Verfahren der Laserablation. In diesem Fall kann mit dem erfindungsgemäßen Verfahren erreicht werden, dass eine tiefere und/oder umfassendere Materialabtragung an der Oberfläche erfolgt.

Das erfindungsgemäße Verfahren kann insbesondere auch dazu verwendet werden, Modifikationen im Inneren des transparenten Werkstücks zu erzeugen. Dazu können die Parameter des Kurzpuls- oder Ultrakurzpulslasers so eingestellt werden, dass Beschädigungen an der Oberfläche des transparenten Werkstücks vermieden werden.

Mit anderen Worten kann das erfindungsgemäße Verfahren also auch dazu verwendet werden, Innenmarkierungen oder Innenschädigungen in dem transparenten Werkstück zu erstellen. Bei passenden Parametern können dabei Beschädigungen einer Oberfläche, durch die der Laserstrahl in das Werkstück eintritt, ausgeschlossen werden. Insbesondere können auch Hohlräume im Inneren des Materials, sogenannte Voids, erzeugt werden. Mit dem erfindungsgemäßen Verfahren können insbesondere ausgeprägtere Innenmarkierungen und größere Voids erzielt werden.

Ein mit dem erfindungsgemäßen Verfahren herstellbarer Kompositwerkstoff, insbesondere in Form einer Glaskeramik oder auch ein Polymerwerkstoff, zeichnet sich dadurch aus, dass das Produkt aus dem in Kubiknanometern angegebenen Volumen eines Bereichs der wenigstens einen zweiten Phase und dem um eins verminderten Verhältnis der Dielektrizitätszahlen der ersten Phase und der wenigstens einen zweiten Phase größer als fünfhundert, vorzugsweise größer als eintausend, besonders bevorzugt größer als zweitausend ist, wobei die Dielektrizitätszahl der ersten Phase εᵣ₁ größer gleich der Dielektrizitätszahl der wenigstens einen zweiten Phase εᵣ₂ ist.

Das Produkt GE = (Partikelvolumen/nm³) • (|Δsᵣ|/εᵣ) mit GE > 500, vorzugsweise GE > 1000, besonders bevorzugt GE > 2000 ist eine für einen nachfolgend erläuterten Grenzflächeneffekt charakteristische Größe. Bei dem erfindungsgemäßen Kompositwerkstoff wird als Produkt GE dabei das über die Volumenanteile gewichtete Mittel der entsprechenden Produkte genommen. Als physikalische Ursache kann angenommen werden, dass die Normalkomponente der elektrische Feldstärke E an einer Grenzfläche eines Materials einen Sprung erfährt. Die Feldstärken E₁, E₂ verhalten sich dabei umgekehrt proportional zum Verhältnis der Dielektrizitätskonstanten. Es gilt also E₂/E₁ = εᵣ₁/εᵣ₂. Deswegen verdoppelt sich die Feldstärke beim Übergang von einem dielektrischen Material mit εᵣ₁ = 4 in eines mit εᵣ₂ = 2.

Erfindungsgemäß verläuft im Inneren des Kompositwerkstoffs wenigstens eine linienhafte Modifikation des Materials, welche einen mindestens 500 Mikrometer langen Kanal von Defekten darstellt.

Diese linienhaften Modifikationen können sich über die gesamte Dicke des Werkstücks erstrecken, insbesondere wenn die Laserbearbeitungsvorrichtung am Ort der zu erzeugenden Modifikation senkrecht auf eine Oberfläche des Werkstücks ausgerichtet ist. Jede linienhafte Modifikation stellt einen Kanal von Defekten im Wesentlichen in Richtung der optischen Achse dar. Es ist vorgesehen, in einer Linie nebeneinander bzw. hintereinander aufgereiht solche linienhaften Modifikationen zu erzeugen. Entlang dieser Linie, welche auch eine beliebig geformte Kurve sein kann, kann das Werkstück dann in einem nachfolgenden Prozess getrennt werden. Die Linie kann also als Trennlinie dienen.

Die reihenartige Anordnung der linienhaften Modifikationen entlang einer vorgegebenen Kontur, welche der gewünschten Trennlinie bzw. späteren Bruchlinie entspricht, wird durch eine Relativbewegung der geeignet geformten, vorzugsweise fokussierten, gepulsten Laserstrahlung bezüglich des Werkstücks erreicht.

Zur Erzeugung einer Modifikation, insbesondere linienförmiger Modifikationen als Teil einer gesamten Trennlinie, kann der Laserpuls auch in Form eines Bursts abgegeben werden. "Burst" bedeutet, dass der eigentliche Laserpuls in mehrere Teilpulse zerlegt wird, die ein Pulspaket ausmachen. Der Kurzpuls- oder Ultrakurzpulslaser wird in diesem Fall also im sogenannten Burst-Mode eingesetzt. Die Burst-Frequenz, die den zeitlichen Abstand der Teilpulse eines Bursts beschreibt, ist in der Regel viel größer als die Repetitionsrate des gepulsten Lasers und kann zum Beispiel 50 MHz betragen, im Vergleich zu einer Repetitionsrate von zum Beispiel nur 1 kHz. Aus diesem Grund werden alle Laserteilpulse eines Bursts nahezu am gleichen Ort in das Werkstück eingekoppelt und tragen alle zur Ausbildung einer einzigen Modifikation, vorzugsweise einer linienhaften Modifikation, bei.

Weitere wichtige Parameter des Kurzpuls- oder Ultrakurzpulslasers sind seine Wellenlänge, die im Transparenzbereich des Werkstücks liegt, seine mittlere Leistung, seine Repetitionsrate, seine Pulsdauer und sein Strahlprofil.

Die Strahlformungsoptik hat zur Aufgabe, eine axial und transversal definierte Intensitätsverteilung im dielektrischen Werkstück einer bestimmten Dicke zu erzeugen.
Bevorzugt werden Strahlformungssysteme verwendet, die statt einer perfekten punktförmigen Fokussierung im Werkstück eine in axialer Richtung ausgedehnte und in transversaler Richtung kompakte Intensitätsverteilung hervorrufen.
Dazu kann die Strahlformungsoptik der Laserbearbeitungsvorrichtung unterschiedlich geformte optische Elemente enthalten. Möglich sind beispielsweise konkave, konvexe, plankonkave, plankonvexe Linsen oder aber auch konkave, konvexe, plankonkave, plankonvexe Linsen oder Axikons. Mit Axikons ist es insbesondere möglich aus Laserstrahlen, deren Intensitätverteilung einem Gaußstrahl entspricht, solche Laserstrahlen zu erzeugen bzw. anzunähern, deren Intensitätsverteilung einem Bessel-Strahl entspricht. Mit dem erfindungsgemäßen Verfahren ist auch eine Materialbearbeitung mittels (genäherter) Bessel-Strahlen möglich. Alternativ, und wegen i.a. geringerer Justierbedürftigkeit bevorzugt, können auch optische Systeme mit gezielter sphärischer Aberration verwendet werden. Im einfachsten Fall handelt es sich um sphärische Linsen oder Systeme daraus oder um optische Elemente mit asphärische Flächen. Des weiteren können auch difffraktive, holografische Elemente mit konstanter oder variablen Eigenschaften verwendet werden. Ziel ist es immer, entlang einer Strecke von einigen 100 µm bis zu einigen Millimetern eine auf der optischen Achse gleichförmige, möglichst hohe Intensität zu erzeugen, wobei deren zentrale Halbwertsbreite möglichst wenig in axialer Richtung variiert und eine Breite von wenigen Laser-Wellenlängen aufweist.
Darüber hinaus ist es meistens vorteilhaft, die x,y,z-Position als Funktion der Zeit auf dem Werkstück einzustellen bzw. zu regeln. Weiterhin kann es bei Abweichungen der Oberfläche des Werkstücks von einer ebenen Fläche oder bei gekrümmten Flächen wie Rohren günstig sein, die Richtung der einfallenden Laserstrahlung bezüglich der lokalen Flächennormalen einzustellen bzw. zu regeln.
Das Volumen der einzelnen Partikel kann umgekehrt auch in Abhängigkeit von dem Verhältnis der Dielektrizitätszahlen der eingeschlossenen Phase und der umgebenden Phase sowie der gewünschten Länge der Filamente gewählt werden.

Bei einem gegebenen Verhältnis der Dielektrizitätszahlen kann der Parameter der Volumengröße der einzelnen Partikel der eingeschlossenen Phase eine entscheidende Größe sein, um eine gewünschte Länge oder eine gewünschte Ausprägung der linienhaften Modifikationen in dem Werkstück zu erhalten.

Eine besonders einfache Einstellung der Länge der Modifikationen ist über die Höhe der Pulsenergie möglich.

Mit dem erfindungsgemäßen Verfahren ist es beispielsweise möglich, bei Werkstücken aus einem mehrphasigen Material unter Berücksichtigung der bekannten Werte der unterschiedlichen Dielektrizitätszahlen der zwei oder mehr Phasen eine gewünschte Ausdehnung oder Ausprägung der Modifikation, insbesondere der Länge einer linienhaften Modifikationen, dadurch zu erhalten, dass die Volumengröße der einzelnen Partikel einer eingeschlossenen Phase eingestellt bzw. variiert wird. Eine solche Einstellung oder Variation wird dabei durch entsprechende Auswahl des mehrphasigen Materials vorgenommen.

In einer Ausführung des erfindungsgemäßen Verfahrens wird ein optisches Element zur Umlenkung des Laserlichts und zur sukzessiven Änderung des Auftreffortes des Laserstrahls auf dem Werkstück eingesetzt. Das optische Element kann wenigstens einen beispielsweise als Galvanometerscanner ausgeführten Drehspiegel umfassen.

Vorzugsweise wird im Falle der gewünschten Erzeugung einer linienhaften Modifikation die Relativbewegung der fokussierten Laserstrahlung und des Werkstücks durch ein Bereitstellen eines Werkstücktisches und einer Verschiebeeinrichtung zur Ausrichtung der Fokussier- bzw. Strahlformungsoptik auf das Werkstück zur Herstellung der linienhaften Modifikation im Werkstück und danach zur schrittweisen Relativverschiebung zwischen Optik und Werkstücktisch gemäß der Aufreihungslinie erreicht. Das Bereitstellen eines Werkstücktisches kann allerdings auch für die Erzeugung anders gearteter Modifikation erfolgen.

Experimente im Rahmen der Erfindung haben überraschenderweise gezeigt, dass Glaskeramiken auf den beschriebenen Prozess erheblich anders reagieren als das der jeweiligen Glaskeramik zugehörige Grünglas. Dieser Unterschied zeigt sich vor allem in Ausprägung, Ausdehnung oder Größe der entstehenden Modifikation, welche sich in der Glaskeramik als deutlich ausgeprägter, ausgedehnter bzw. größer als im Grünglas herausgestellt haben. Im Falle linienhafter Modifikationen hat sich insbesondere die Länge der entstehenden linienhaften Modifikationen vergrößert. Es wurde gefunden, dass dies auf die Mehrphasigkeit der Glaskeramik mit ihrer auf Submikron-Skalen variierenden Zusammensetzung in Form einer eingeschlossenen Phase, typischerweise in Form von Nanopartikeln in einer glasigen Matrix, zurückzuführen ist.

Insbesondere kann es sich bei den Phasen der Glaskeramik um die Keime, Hochquarz-Mischkristalle und eine im Wesentlichen umgebende amorphe Restglasphase handeln. Diese Phasen haben unterschiedliche Dielektrizitätszahlen. Somit existieren Grenzflächen innerhalb der Glaskeramik, in denen die Dielektrizitätszahl einen Sprung macht. Wie oben beschrieben kann es bei der Wechselwirkung von Laserstrahlung hoher Intensität mit der Materie zu lokaler Plasmabildung kommen und somit zur Entstehung der beschriebenen Defekte. Entscheidend für die Art und Stärke der Wechselwirkung bzw. für die damit verbundene Modifizierung des Materials ist dabei die Amplitude der elektrischen Feldstärke der Laserstrahlung, welche proportional zur Wurzel aus der Intensität ist. Propagiert ein Laserpuls durch eine Glaskeramik, so wirkt das elektromagnetische Feld (die Welle) auf die Glaskeramik ein.

An den Grenzflächen der Phasen kommt es aufgrund der unterschiedlichen Dielektrizitätszahlen gemäß den Stetigkeitsbedingungen der Feldtheorie der Elektrodynamik zu Überhöhungen in der Feldstärke. Die Stärke der Überhöhung ist dabei abhängig von dem Verhältnis der beiden Dielektrizitätszahlen. Man kann also bei den Überhöhungen der Feldstärke an den Grenzflächen der Phasen von einem "Verstärkungsfaktor" sprechen. Somit ist es erstrebenswert, Phasen möglichst unterschiedlicher Dielektrizitätszahl zu haben, um mit einem hohen Verstärkungsfaktor eine erleichterte Plasmabildung hervorzurufen.

In Experimenten wurde überraschender Weise gefunden, dass nicht nur der Unterschied zwischen den Dielektrizitätszahlen ausschlaggebend für eine effiziente Materialmodifizierung ist, sondern auch die Größe der einzelnen Phasen. Dabei hat sich das Zusammenwirken aus Partikelgröße und Verstärkungsfaktor als entscheidend herausgestellt.

Neben der erwähnten dreiphasigen Glaskeramik sind auch zweiphasige, vierphasige und andere mehrphasige Glaskeramiken und mehrphasige Materialien anderer Materialklassen in Bezug auf das erfindungsgemäße Verfahren möglich. Insbesondere kann es sich bei dem Material um Kompositwerkstoffe handeln, wie beispielsweise einen Polymerwerkstoff mit feinverteilten Partikeln. Bei der Glaskeramik kann es sich um optische Filter, sogenannte Anlaufgläser und Glaskeramiken mit thermischer Nullausdehnung handeln.

Es kann vorgesehen sein, dass die Vorbestimmung der Größe des Partikelvolumens auf der Basis der Annahme erfolgt ist, dass das Maß der Auswirkung der Grenzfläche zwischen zwei Phasen bei der Entstehung eines Plasmas - hierin als "Grenzflächeneffekt" bezeichnet - proportional zu dem Partikelvolumen ist. Die Vorbestimmung der Partikelvolumengröße kann ferner auf der Annahme basieren, dass die Partikel kugelartig, also im Wesentlichen kugelförmig, sind. Bei dieser Annahme kann mit anderen Worten davon ausgegangen werden, dass der Grenzflächeneffekt proportional zu der dritten Potenz des Partikeldurchmessers ist.

Ferner kann für die Vorbestimmung der Partikelgröße die Annahme gemacht werden, dass der Grenzflächeneffekt proportional zu dem Verhältnis der Dielektrizitätszahlen der beiden Phasen (vgl. vorher) minus eins ist. Bei dem Dielektrizitätszahlen-Verhältnis befindet sich die größere Dielektrizitätszahl, zum Beispiel die der umgebenden Restglasphase, im Zähler und die kleinere Dielektrizitätszahl, zum Beispiel die der Hochquarz-Mischkristalle, im Nenner. Die Plasmabildung tritt stets beim Eintritt der elektromagnetischen Welle in das Medium geringerer Dielektrizitätszahl auf.

Unter Zugrundelegung der drei oben genannten Annahmen, kann vorzugsweise als charakteristische Größe GE für den Grenzflächeneffekt folgende Beziehung verwendet werden: (Partikelvolumen/nm³) • (|Aεᵣ-|/εᵣ) > x mit x ∈ {500, 1000, 2000} mit εᵣ als Dielektrizitätszahl des glasigen Mediums.

In der Beziehung ist der erste Faktor ein Maß für das Partikelvolumen, und der zweite Faktor ein Maß für den Sprung der elektrischen Feldstärke. Im Falle gleicher Dielektrizitätszahlen ist dieser Faktor und somit auch der Grenzflächeneffekt gleich null. Die Partikeldurchmesser-Angabe ist in Nanometern (nm) angegeben, wobei die Division durch nm³ lediglich zur Entdimensionierung von der Größe GE dient.

In Glaskeramik kommt es aufgrund des Grenzflächeneffektes GE bereits bei geringeren Intensitäten zu einer Schädigung, also zur Ausbildung von Modifikationen. Diese können dann sogar stärker, ausgedehnter, ausgeprägter, größer oder länger ausfallen als in Grünglas. Da jedoch nicht so viel Energie pro Fläche deponiert werden kann, fallen in Glaskeramik die Defekte nicht so ausgeprägt aus. In einem der Glaskeramik entsprechenden Grünglas hingegen bedarf es größerer Intensitäten, sodass dort die Schädigung stärker ausfällt als in Glaskeramik.

Es wurde ferner herausgefunden, dass im Fall der filamentartigen Strahlpropagation bei Grünglas in der Regel eine höhere Anzahl an Refokussierungszyklen stattfindet. Dies lässt sich mit dem oben beschriebenen Grenzflächeneffekt erklären. Da bei Grünglas höhere Intensitäten des Lasers nötig sind, um das Plasma zu zünden, ist der Gleichgewichtszustand, welcher über die Länge des Filaments entscheidet, instabiler und bricht schneller zusammen. Hat der Puls danach jedoch noch ausreichend Energie, so kann er refokussieren.

Es kann ferner vorgesehen sein, die gewünschte Größe oder Ausprägung der Modifikationen, insbesondere der Länge im Falle linienhafter Modifikationen, dadurch einzustellen, dass für den Fall der Verwendung des Burst-Modes die Teilpulsanzahl pro Burst eingestellt wird. Es kann sein, dass die Teilpulse eines Bursts in Summe in Abhängigkeit von der Bauart des Lasers etwas mehr Energie in sich tragen als ein entsprechender einzelner Puls im Single-Shot-Mode. Jedoch ist typischerweise die Energie des Erstpulses eines Bursts umso größer, je geringer die Pulsanzahl pro Burst ist. Je größer die Energie des ersten Pulses des Bursts ist, desto größer ist die mögliche Ausprägung der Modifikationen. Mit der Anzahl der weiteren Pulse erhöht sich nur die sogenannte Defektkategorie. Die Defektkategorie ist ein Maß für die Stärke der Schädigung des transparenten Materials (die Ausprägung der Modifikation). So können folgende Defektkategorien unterschieden werden: 0 = keine Modifikationen unter 100-facher Vergrößerung zu erkennen; 1 = dünner Kanal; 2 = dünner Kanal mit stellenweisen dickeren Bereichen; 3 = größere Beschädigung; 4 = Risse, Mikroexplosionen und/oder Schmelzbereich.

So benötigt man bei Grünglas im Vergleich zu Glaskeramik im Fall der Verwendung des Burst-Modes eine höhere Pulsenergie im ersten Teilpuls, um die gleiche Größe oder Ausprägung einer Modifikation, insbesondere die gleiche Länge einer linienhaften Modifikation, zu erhalten. Durch eine Veränderung der Teilpulsanzahl pro Burst lässt sich die Energie des ersten Pulses regulieren, wodurch sich somit die Größe oder Ausprägung der Modifikation einstellen lässt.

Es kann ferner vorgesehen werden, dass der Median der Partikelgrößen 6 nm oder mehr, vorzugsweise 8 nm oder mehr besonders bevorzugt 10 nm oder mehr beträgt. Denn es scheint eine kritische Partikelgröße zu geben, ab welcher der Grenzflächeneffekt besonders wirksam wird. Unter Berücksichtigung dieser kritischen Partikelgröße kann der genannte Median der Partikelgrößen vorteilhaft sein.

Vorzugsweise können bei der Herstellung des Werkstückmaterials fein verteilte zusätzliche Partikel vorgesehen werden, um dadurch den Vorgang der Erzeugung der Modifikation effizienter zu gestalten.

Mit dem erfindungsgemäßen Verfahren, das insbesondere bei aus Flachglas hergestellter Glaskeramik angewendet werden kann, ist es möglich, mit geringeren Laserleistungen höhere Schnittleistungen als bei homogenen Gläsern zu erzielen, womit ein finanzieller Vorteil verbunden ist. Die aufgrund der bauartbedingten Begrenzung der Pulsenergie von Laserquellen gegebene Obergrenze der bearbeitbaren Materialdicke bei mehrphasigen Materialien ist größer als bei homogenen Gläsern, was bei einer Anwendung auf sehr dicke oder mehrlagige Materialien von Vorteil ist.

Bevorzugt umgeben die Bereiche der ersten Phase bei dem erfindungsgemäßen Kompositwerkstoff die Bereiche der wenigstens einenzweiten Phase zumindest teilweise, also im Wesentlichen. Besonders bevorzugt sind bei dem erfindungsgemäßen Kompositwerkstoff die Bereiche der wenigstens einen zweiten Phase von der ersten Phase vollständig eingeschlossen.

Bei dem erfindungsgemäßen Kompositwerkstoff können Bereiche der wenigstens einen zweiten Phase voneinander beabstandet vorliegen. Eine Ausführungsform des erfindungsgemäßen Kompositwerkstoffs zeichnet sich dadurch aus, dass die Bereiche der wenigstens einen zweiten Phase im Wesentlichen kugelförmig ausgebildet sind. Bei einer anderen Ausführungsform des erfindungsgemäßen Kompositwerkstoffs liegen die Längen der linienhaften Modifikationen zwischen 100 bis 10000 µm, vorzugsweise zwischen 1000 bis 10000, besonders bevorzugt zwischen 3000 bis 10000 µm.

Ebenso kann das Verhältnis der ersten und zweiten Dielektrizitätszahl (εᵣ₁/εᵣ₂) größer gleich 1,05, besser größer als 1,1, bevorzugt mindestens 1,3 sein. Das bedeutet, anders ausgedrückt, dass |εᵣ₁-εᵣ₂|/εᵣ₂, an anderer Stelle auch bezeichnet als |Δεᵣ|/εᵣ, größer gleich 0,05, besser großer als 0,1, bevorzugt mindestens 0,3 sein kann.

Es versteht sich, dass der erfindungsgemäße Kompositwerkstoff mehr als zwei Phasen enthalten kann. Es können in einer ersten Phase mehrere zweite Phasen unterschiedlicher Dielektrizitätszahlen enthalten sein.

Bevorzugt enthält der erfindungsgemäße Kompositwerkstoff eine reihenartige Anordnung von linienhaften Modifikationen zur Ausbildung einer Trennlinie.

Weitere Einzelheiten der Erfindung ergeben sich aus der folgenden Beschreibung der dargestellten Ausführungsbeispiele in Verbindung mit den Figuren. Es zeigen:
Fig. 1 eine Laserbearbeitungsvorrichtung während der Bearbeitung eines Werkstücks auf einem Werkstücktisch,
Fig. 2 ein aus Defekten in einer Glaskeramik gebildete linienhafte Modifikation,
Fig. 3 Längen von linienhaften Modifikationen , die zum Vergleich in Glaskeramik und zugehörigem Grünglas mit Linsen verschiedener Brennweiten der Fokussieroptik in Abhängigkeit von der Teilpulsanzahl je Burst erzeugt worden sind,
Fig. 4 schematisch zwei Verläufe der Intensitäten entlange der Mittenachse von in der Glaskeramik fokussierten Strahlen,
Fig. 5 Rasterelektronenmikroskopie-Aufnahmen linienhafter Modifikationen in einer Glaskeramik (a) und in einem Borosilikatglas (b).

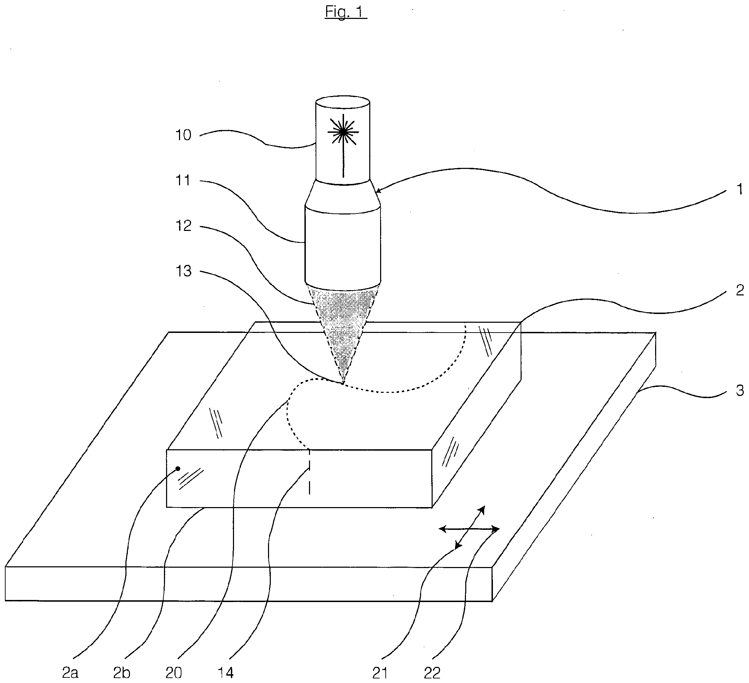

In Fig. 1 ist eine Laserbearbeitungsvorrichtung 1 über einem Werkstück 2, das auf einem Werkstücktisch 3 aufliegt, dargestellt. Die Laserbearbeitungsvorrichtung 1 weist einen Ultrakurzpulslaser 10 und eine Fokussieroptik 11 auf, um ein fokussiertes Strahlenbündel 12 abzugeben, dessen Fokus 13 in etwa auf der Oberseite des Werkstückes 2 gelegen ist. Auf dem Werkstück 2 ist eine Schnittlinie oder Bruchlinie 20 angedeutet, entlang welcher das Werkstück 2 aufgetrennt oder gespalten werden soll. Es ist vorgesehen, dass der Fokus 13 entlang dieser Linie 20 gefahren werden kann, was durch Verstellung des Tisches 3 in den beiden Koordinatenrichtungen 21, 22 zu bewerkstelligen ist. Es werden sehr kleine Verstellschritte benutzt.

Die Wellenlänge der Strahlung des Ultrakurzpulslasers 10 ist so gewählt, dass sie in einem Transparenzbereich des Werkstücks 2 liegt. Der Ultrakurzpulslaser 10 wird in einem sogenannten Burstmode betrieben, in dem der eigentliche, als Burst bezeichnete Puls selber ein Pulspaket bildet, das mit einer Repetitionsrate R von etwa 100 kHz wiederkehrt. Die Energie der Laserpulse bzw. der Pulspakete (Bursts) ist so bemessen, dass sich bei jedem Burst ein als Filament bezeichneter Schädigungskanal 14 senkrecht zu einer Oberseite 2a des Werkstücks 2 in dessen Inneres bildet. Indem die Strahlformungsoptik 11 entlang einer vorgebbaren Bewegungslinie 20 mit verfahren wird, wird in dem Werkstück 2 eine Reihe von linienhaften Modifikationen 14 erzeugt. Bei einer Vorschubgeschwindigkeit von 1 m/s weisen die Anfangspunkte der in Richtung auf die Unterseite 2b gerichteten Schädigungskanäle 14 entlang der Bewegungslinie 20 des Ultrakurzpulslasers 10 auf der Oberseite 2a Abstände von 10 µm auf. Die Bewegungslinie 20 des Ultrakurzpulslasers 10 relativ zum Werkstück 2 schreibt eine Bruchfläche vor und wird daher als Bruchlinie 20 bezeichnet.

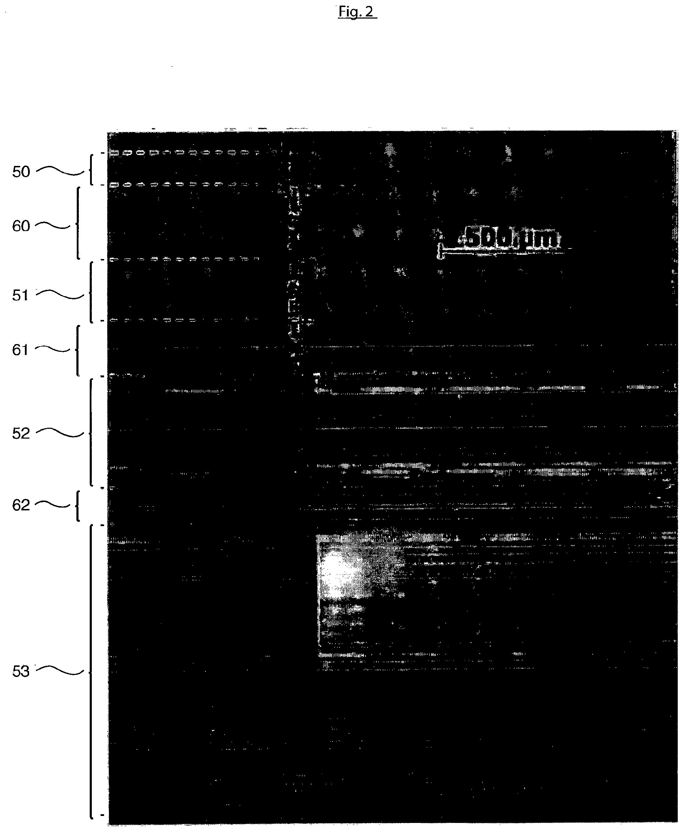

Derartige mit dem erfindungsgemäßen Verfahren bzw. in dem erfindungsgemäßen Kompositwerkstoff gebildete linienhaften Modifikationen 14 sind in Fig. 2 gezeigt. Wie aus Fig. 2 ersichtlich, sind die linienhaften Modifikationen 14 aus Defekten 50, 51, 52 und 53 mit Längen von 108 µm, 221 µm, 357 µm und 1037 µm gebildet, die entlang eines Schädigungskanals erzeugt worden bzw. angeordnet sind. Die in Fig. 2 gezeigten Defekte haben Abstände 60, 61 und 62 von 263 µm, 195 µm und 34 µm. Mittelwerte aus drei Fig. 2 äquivalenten Messungen ergaben Defektlängen von 104 µm, 237 µm, 350 µm und 1020µm mit Abständen von 290 µm, 209 µm und 150 µm.

Dieses Ausführungsbeispiel, das sich auf die Erzeugung linienhafter Modifikationen beschränkt, zeigt also, dass die Defektlängen nicht konstant sein müssen. Dies kann von großem Vorteil sein, um das Werkstück an der Aufreihungslinie der Filamente später sauber auftrennen zu können.

In einer Weiterbildung des erfindungsgemäßen Verfahrens ist dementsprechend allgemein und ohne Beschränkung auf das oben erläuterte spezielle Ausführungsbeispiel vorgesehen, dass in einem transparenten Werkstück 2 befindliche entlang einer Linie 20 aufgereihte linienhaften Modifikationen 14, jeweils aus mehreren entlang eines Kanals angeordneten Defekten gebildet sind, wobei die Längen der Defekte mit zunehmenden Abstand von einer Oberfläche des Werkstücks zunehmen. Damit sind bei einer Zug- bzw. Biegebelastung, wie sie beim gewollten Auseinanderbrechen des Werkstücks an der Aufreihungslinie der linienhaften Modifikationen angewendet wird, kürzere Defekte nahe der Oberfläche, also dort, wo die größere Biegespannung auftritt, vorhanden. Im Volumen, zur Mitte des Werkstücks hin, ist die Zugspannung im Fall der Biegebelastung kleiner. Dafür sind die Defekte länger und das Werkstück hier in größerem Maße geschwächt. Wird also das Werkstück einer Biegebelastung ausgesetzt, wird die kritische Biegebelastung gleichmäßiger entlang der Filamentstruktur verteilt, so dass das Bruchverhalten verbessert wird.

Im Folgenden wird die Untersuchung eines korrespondierenden Paares von Glaskeramik und Grünglas beschrieben, die im Folgenden mit Glaskeramik A bzw. Grünglas A bezeichnet werden. Das Grünglas A besitzt eine Glaszusammensetzung, die Li₂O (Lithiumoxid), Al₂O₃ (Aluminiumoxid), SiO₂ (Siliziumdioxid), und zusammen etwa vier Gewichtsprozent TiO₂ (Titandioxid) sowie ZrO₂ (Zirkoniumdioxid) enthält. Die Transformationstemperatur dieser Zusammensetzung beträgt 670 °C.

Auf der Basis dieses Grünglases A ist die Glaskeramik A durch Keramisierung hergestellt worden, bei der sich im glasigen Material einzelne, fein verteilte Kristalle bilden. Hierfür ist das Grünglas A in einem elektrisch beheizten Keramisierungsofen prozessiert worden. Der dabei erfolgende Umwandlungsprozess des Materials lässt sich in die Keimbildung und das Kristallwachstum unterteilen. Am Anfang einer jeden Kristallisation steht ein Kristallisationskeim, an dem der Kristall zu wachsen beginnen kann.

Bei dem Grünglas A liegen Verunreinigungen in Form des hinzugefügten Titandioxids und Zirkoniumdioxids vor, welche eine hohe Schmelztemperatur (1855 °C bzw. 2715 °C) aufweisen, bei Erwärmung ausfallen und als Kristallisationskeime wirken. Sie stellen beim Keramisierungsprozess heterogene Keime dar, wodurch eine hohe Keimdichte und eine kleine Kristallgröße erreicht werden. Durch Kristallwachstum wächst auf den Kristallisationskeimen aus orthorhombisch angeordnetem ZrTiO₄ ein Hochquarz-Mischkristall (HQMK). Er basiert auf dem LAS-System, das seinen Namen auf Grund der Kristallbausteine Lithiumoxid, Aluminiumoxid und Siliziumdioxid trägt. Quarz (SiO₂) wandelt sich bei 573 °C in sogenannten Hochquarz um. Durch die Einlagerung anderer Atome ist der HQMK jedoch beim Unterschreiten dieser Temperatur stabil.

Für die Untersuchungen wurde ein Ultrakurzpulslaser verwendet, wobei eine Wellenlänge von 1064 nm, eine mittlere Leistung von 12 W (bei 1064 nm, 100 kHz, 1 Puls pro Burst), eine Repetitionsrate von 100 kHz, eine Burst-Frequenz von 50 MHz eine Pulsdauer von ungefähr 10 ps (bei 1064 nm und 100 kHz) und als Strahlprofil ein Gaußstrahl verwendet wurden.

Die durch einen Laserpuls eingebrachte und absorbierte Energie führt in der Glaskeramik A aufgrund der im Vergleich zu Grünglas geringeren Wärmekapazität zu einer stärkeren Erwärmung, wobei die entstehende Wärme auch effizienter als im Grünglas A abgeleitet wird. In sehr kurzen Zeitregimen im Nanosekundenbereich ist jedoch damit zu rechnen, dass noch keine signifikante Wärmeabfuhr stattfinden kann, weshalb die Annahme einer höheren Temperatur in der Glaskeramik A gegenüber dem Grünglas A gerechtfertigt ist.

Beim Burst-Mode trifft der zweite Puls des Bursts somit auf einen bereits vorgewärmten Bereich. Die Burst-Frequenz von 50 MHz hat zur Folge, dass zwischen den einzelnen Pulsen lediglich 20 ns Zeit liegt, was der im vorigen Absatz erwähnten Bedingung genügt. Die Auswirkungen des Burst-Mode bei der USP-Laserblast-Technologie sind zwar noch nicht abschließend geklärt, jedoch liegt eine stärkere Vermutung auf eben der Wärmedeposition, die das Verhalten der weiteren Pulse beeinflusst. Die erzeugten Defekte bilden sich mit steigender Pulsanzahl a effizienter aus.

Es wurde deshalb eine Versuchsreihe durchgeführt, bei der gemäß einer bevorzugten Ausführungsform der Erfindung linienhafte Modifikationen eingefügt wurden und beide Materialien mit jeweils unterschiedlichen Anzahlen a von Pulsen pro Burst bearbeitet wurden. Um eine breitere Datenvielfalt zu erhalten, sind vier Linsen unterschiedlicher Brennweite verwendet worden. Nach der oben ausgeführten Theorie müsste das Verhältnis der Gesamtlängen der Defekte bzw. linienhaften Modifikationen der Glaskeramik A zur entsprechenden Gesamtlänge im Grünglas A mit steigender Teilpulsanzahl pro Burst anwachsen, da der Effekt der Wärmedeposition mit steigender Teilpulsanzahl stärker zum Tragen kommt.

Es ist jedoch auf die Energieverteilung auf die einzelnen Teilpulse des Bursts zu achten. Bei lediglich einem Teilpuls liegen die Pulsenergie bei 120 µJ und die Pulsspitzenleistung bei 12 MW. Beim zweipulsigen Burst-Mode hingegen hat der erste Puls etwa 77 µJ und der zweite 56 µJ. Es kann bei hohen Pulsanzahlen demnach dazu kommen, dass die Pulsenergien und damit auch die Pulsspitzenleistungen und Intensitäten zu gering sind, um im Material eine Modifikation hervorzurufen.

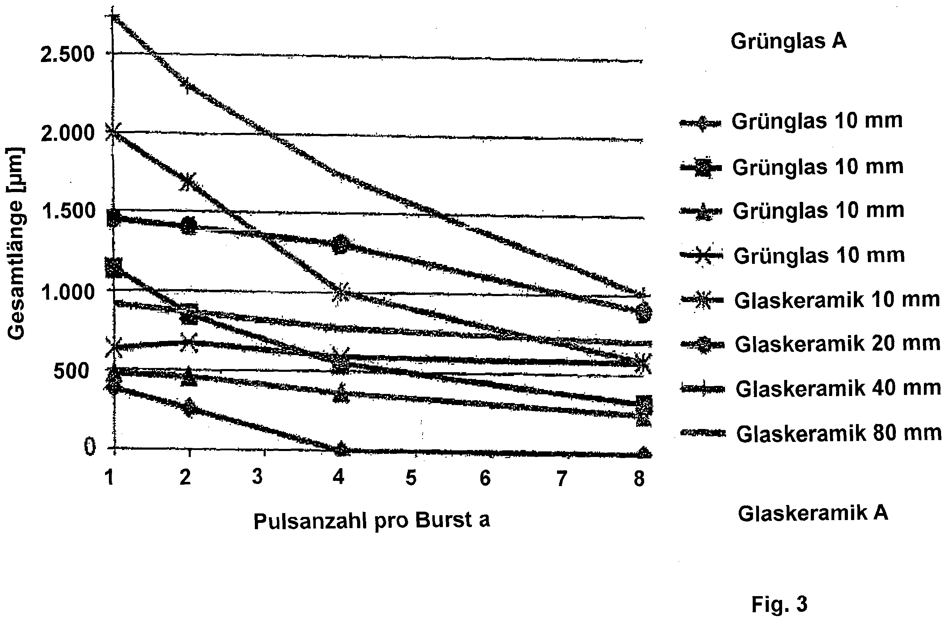

Die Repetitionsrate, die Vorschubgeschwindigkeit in y-Richtung (1 m/s) und das Leistungsniveau (100 %) wurden während der Versuchsreihe konstant gehalten. Fig. 3 zeigt die Ergebnisse.

Lediglich bei zwei Konstellationen kam es zu keiner Beschädigung des Materials: Grünglas A, 10 mm Brennweite und vier bzw. acht Pulse je Burst. Hier hat die Pulsenergie des ersten Teilpulses des Bursts nicht ausgereicht, um eine Modifikation des Materials zu erzeugen. Bei anderen Optiken war dieses Ausbleiben nicht der Fall, da deren erzeugte Strahlform vermutlich günstiger ist.

Aus den Ergebnissen wird eine starke Abhängigkeit der Gesamtlänge von der Teilpulsanzahl a deutlich. Mit einer Ausnahme (Grünglas A, Brennweite gleich 80 mm und a gleich zwei) nimmt die Gesamtlänge mit steigender Teilpulsanzahl ab, dies zeigt Fig. 2, in der zur Verdeutlichung der monoton fallenden Eigenschaft der Messdaten die Messpunkte verbunden wurden. Vermutlich liegt dies an der geringen Pulsenergie des ersten Pulses des zur Verfügung stehenden Lasers, welche für steigende Teilpulsanzahlen a abnimmt. Die Annahme, dass die Energie des ersten Pulses für die Länge zuständig ist und die weiteren Teilpulse nur die Art der Beschädigung verstärken, ist somit zumindest im ersten Punkt bestätigt worden.

Im Folgenden wird des weiteren die Untersuchung eines Materials beschrieben, das zur Herstellung optischer Filter verwendet wird. Es handelt sich hierbei um das Material RG610, wobei dieses als Grünglas (im Folgenden als Grünglas RG610 bezeichnet) und auch als durch thermische Behandlung des Grünglases hergestellte sog. Anlaufglas mit mindestens 2 verschiedenen glasigen bzw. glasig-kristallinen Phasen untersucht wurde.

Im Zustand des Anlaufglases, das zwei Phasen aufweist, beträgt der Brechungsindex 1,52. Das gelbe Grünglas RG610 färbt sich durch die Wärmebehandlung, womit das Anlaufglas RG610 später tiefrot erscheint. Der Grund hierfür sind die entstandenen Mischphasen (amorph oder kristall), die Cadmium, Schwefel, Selen und Zink enthalten. Da für diese Mischphasen kein Brechungsindex vorliegt, ist dieser aus den Brechungsindizes bei der D-Linie von 588 nm für artverwandte Kristalle gebildet worden: Zinkselenid, Zinksulfid, Cadmiumselenid, Cadmiumsulfid. Es ergibt sich somit ein Brechungsindex des Kristalls von 2,53. Da die kristalline Phase nur einen geringen Volumenanteil (ca. 12 %) aufweist, kann der Brechungsindex der Restglasphase mit dem des Grünglases RG610 von 1,52 genähert werden. Es ergibt sich somit ein Verhältnis der Dielektrizitätszahlen (Verhältnis der Brechungsindizes zum Quadrat) von 2,770. Die Größe der Kristalle (Durchmesser) beträgt etwa 12 nm.

Bei der Anwendung des Ultrakurzpuls-Laser Technologie auf RG610 konnte die Diskrepanz zwischen Grünglas und Glaskeramik deutlich gezeigt werden: Die Defekte in der Glaskeramik RG610 sind mehr als doppelt so lang als bei dem Grünglas RG610 und erreichen bis zu 5 mm Länge in 6,6 mm dickem Glas.

**Tabelle 1:**

| Material | Partikeldurchmesser [nm] | Verhältnis der Dielektrizitäts zahlen | Grenzflächen - effekt GE |
|---|---|---|---|
| Anlaufglas RG610 | 12 | 2,770 | 3059 |
| Glaskeramik A | 40 | 1,107 | 6848 |
| vorgekeimtes Material A | 4 | 2,374 | 88 |

Tabelle 1 zeigt die mit Hilfe der obigen Formel berechneten Faktoren des Grenzflächeneffekts GE für RG610 (als Anlaufglas) und Glaskeramik A (Grenzfläche Restglasphase und Hochquarz-Mischkristall) sowie vorgekeimtes Material A (Grenzfläche Restglasphase und Keim).

Der berechnete Wert ist für die Glaskeramik A zwar mehr als doppelt so groß wie der Wert für das Anlaufglas RG610 A, dennoch befinden sich beide in der gleichen Größenordnung. Anders ist dies beim Wert für das vorgekeimte Material A.

Bei Grünglas und Glaskeramik A handelt es sich um ein Lithium-Aluminosilikatglas mit der Zusammensetzung:

| | | |
|---|---|---|
| 60 - 73,0 | Gew.-% | Si0₂, |
| 15 - 25,0 | Gew.-% | Al₂O₃, |
| 2,2 - 5,0 | Gew.-% | Li₂O, |
| 0 - 5,0 | Gew.-% | CaO + SrO + BaO, |
| 0 - 5,0 | Gew.-% | TiO₂, |
| 0 - 5,0 | Gew.-% | ZrO₂, |
| 0 - 4,0 | Gew.-% | ZnO |
| 0 - 3,0 | Gew.-% | Sb₂O₃, |
| 0 - 3,0 | Gew.-% | MgO, |
| 0 - 3,0 | Gew.-% | SnO₂. |
| 0 - 9,0 | Gew.-% | P₂O₅, |
| 0 - 1,5 | Gew.-% | As₂O₃, |
| 0 - 1,2 | Gew.-% | Na₂O + K₂O, wobei die jeweiligen Anteile innerhalb der nachfolgend angegebenen Bereiche liegen, |
| 0 - 1,0 | Gew.-% | Na₂O, |
| 0 - 0,5 | Gew.-% | K₂O sowie |
| 0 - 1,0 | Gew.-% | färbende Oxide. |

Vorstehend ist für zwei Linsen dargelegt worden, dass mit einer Parameteranpassung in der Glaskeramik A die gleiche Filamentstrukturlänge erzielt werden kann wie im Grünglas A. Dabei kann auch die gleiche Defektkategorie wie im Grünglas A erreicht werden. Demgemäß ist die Energie des ersten Teilpulses des Bursts entscheidend für die Defektlänge, wohingegen gefunden wurde, dass die weiteren Pulse nur die Defektkategorie erhöhen. Bei gleichen Parametern sind die Defekte in der Glaskeramik A zwar länger als im Grünglas A, jedoch ist deren Defektkategorie nicht so hoch. Mit einer erhöhten Anzahl der Teilpulse je Burst werden die Defekte kürzer und die Defektkategorie größer. Es wurde festgestellt, dass mit acht Teilpulsen in der Glaskeramik A die gleichen Ergebnisse wie mit zwei Teilpulsen im Grünglas A erreichbar sind.

Aufgrund des Grenzflächeneffektes GE in der Glaskeramik A kommt es bereits bei geringeren Intensitäten zu einer Schädigung, weshalb diese länger ausfallen als in Grünglas A. Da jedoch nicht so viel Energie pro Fläche deponiert werden kann, fallen die Defekte nicht so ausgeprägt aus. Im Grünglas A hingegen bedarf es größerer Intensitäten, weshalb die Schädigung hier stärker ausfällt. Mit der erwähnten Erhöhung der Teilpulszahlen je Burst lässt sich dies ausgleichen.

Auch die bei Grünglas in der Regel höhere Anzahl an Refokussierungszyklen lässt sich mit diesem Modell erklären. Da bei Grünglas höhere Intensitäten des Lasers nötig sind, um das Plasma zu zünden, ist der Gleichgewichtszustand, welcher über die Defektlänge entscheidet, instabiler und bricht schneller zusammen. Hat der Puls danach jedoch noch ausreichend Energie, so kann er refokussieren.

Für die Erzeugung der Materialmodifikation wird ein Schwellwert der Leistung erreicht oder überschritten. Dieser Schwellwert liegt für Glaskeramik durch den beschriebenen Effekt der Feldstärkeüberhöhung regelmäßig deutlich unter dem Wert für das entsprechende Rohglas (s. Tabelle, alle Werte in W/m²) :

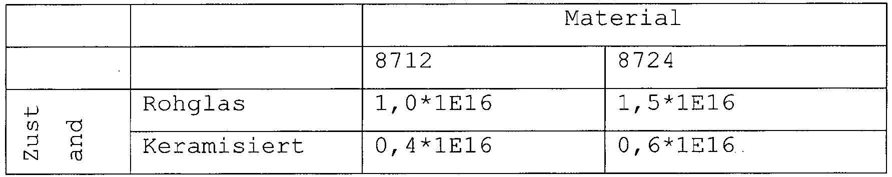

Bei nicht optisch optimierten Aufbauten, z.B. bei einer Fokussierung der Laserstrahlung mittels einer mit sphärischer Aberation behafteten Linse liegt am (in Strahlrichtung gesehen) hinteren Ende des Fokussierungsbereichs im Material eine deutlich höhere Intensität und Leistung vor als in der Nähe der Abbildungsoptik, so dass die Schwellwerte im Wesentlichen nur in der Nähe des Intensitätspeaks überschritten werden. Bei angepaßter Optik wird die gleiche Pulsenergie (gleiche Flächen unter den Kurven) aber im Fokusbereich homogener verteilt, und zwar idealerweise möglichst homogen oberhalb des Glaskeramik-Schwellwertes, so dass in Folge des oben beschriebenen Feldstärkeverstärkungseffektes die Materialmodifikation über einen deutlich längeren Bereich als in Glas erzeugt werden kann.

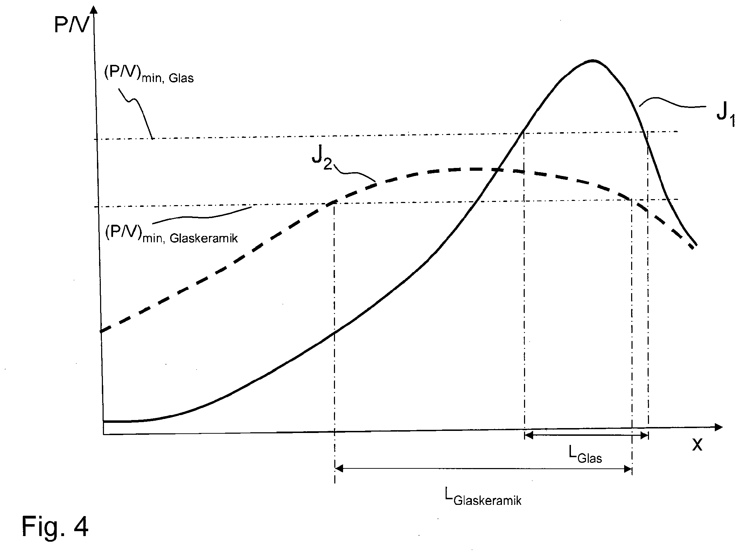

Dieser Effekt wird im Folgenden anhand von Fig. 4 verdeutlicht.

Fig. 4 zeigt schematisch zwei Verläufe J₁. J₂ der Leistung pro Volumen entlang der Mittenachse der Ausbreitungsrichtung von in der Glaskeramik fokussierten Laserstrahlen. Die Werte x entlang der Abszisse kennzeichnen den Abstand zur Linse. Die gewünschten linienhaften Modifikationen werden oberhalb bestimmter Schwellwerte der Leistung pro Volumen erzeugt. In Fig. 4 sind ein Schwellwert (P/V)ₘᵢₙ, _{Glas} für die Erzeugung der Modifikation in Glas und ein demgegenüber niedriger Schwellwert (P/V)ₘᵢₙ, _{Glaskeramik} für die Erzeugung entsprechender Modifikationen in Glaskeramik eingezeichnet.

Der Intensitätsverlauf J₁ ergibt sich beispielsweise durch eine Fokussierung mittels einer mit sphärischer Abberation behafteten Linse.

Der Intensitätsverlauf J₂ ist ein optimierter Verlauf, wie er etwa mittels eines Axikons erzielt werden kann. Mit der Fokussierung wird ein langgestrecktes Intensitätsmaximum erreicht. Bei gleicher Pulsenergie ist die Spitzenintensität dann entsprechend geringer als bei Intensitätsverlauf J₁.

Die Länge der erzeugten linienhaften Modifikationen hängt nun von der Länge des Bereichs ab, in welchem die Pulsleistung pro Volumen den jeweiligen Schwellwert überschreitet. Der Intensitätsverlauf J₁ ermöglicht in Glas noch eine linienhafte Modifikation der Länge L_{Glas}. Mit dem Intensitätsverlauf J₂ kann hingegen keine Modifikation mehr erreicht werden, denn der Schwellwert (P/V)ₘᵢₙ, _{Glas} wird mit der vergleichsweise niedrigeren Maximalintensität nicht mehr überschritten. In Glaskeramik ist dies hingegen mit dem geringeren Schwellwert (P/V)ₘᵢₙ, _{Glaskeramik} nicht nur möglich, auch ist die erzielbare Länge L_{Glaskeramik} größer. Durch den in Strahlrichtung langgezogenen Bereich des Fokus, in welchem der Schwellwert überschritten wird, ergibt sich eine entsprechend langgestreckte linienhafte Modifikation. Demnach kann die Länge der linienhaften Modifikation durch eine entlang des Linienfokus möglichst homogene Verteilung der Laserpulsenergie und Leistung je Volumeneinheit oberhalb der Mindestenergie und Mindestleistung je Volumeneinheit maximiert werden.
Um eine möglichst große Länge der Modifikation zu erzielen, kann also abhängig vom Material des Werkstücks 2 bei gegebener Pulsenergie eine Optik zur Fokussierung des Laserstrahls gewählt werden, die bei verringerter Maximalintensität einen gegenüber einer sphärischen Linse langgestreckten Fokus erzeugt, wobei der Schwellwert zur Erzeugung der Modifikation des Materials nicht unterschritten wird. Mit anderen Worten wird also eine Optik zur Fokussierung der Laserstrahlung verwendet, welche den Fokus in Ausbreitungsrichtung räumlich so verlängert, dass die Maximalintensität der Laserstrahlung kleiner ist, als 150 %, vorzugsweise kleiner ist als 130 % des Schwellwertes der Intensität, ab welchem das Material modifiziert wird.

Eine günstige Intensitätsverteilung wird insbesondere erreicht, wenn der Strahl mittels der Optik so fokussiert wird, dass das Verhältnis des Längenbereichs, entlang welchem die Intensität mindestens 110% des Schwellwerts der Modifikation ist, zum Längenbereich, entlang welchem die Intensität mindestens 10% des Schwellwerts ist, mindestens 0,4, vorzugsweise mindestens 0,5, besonders bevorzugt mindestens 0,7 beträgt. Auf diese Weise wird eine besonders günstige Verteilung der Intensität derart erzielt, dass ein sehr langgezogener Bereich im Material mit Intensitäten oberhalb des Schwellwerts bestrahlt wird.

Anhand von Fig. 4 wird auch deutlich, dass sich die Länge der Modifikation auch durch die Pulsleistung in einfacher Weise einstellen lässt. Mit steigender Leistung verlängert sich der Längenabschnitt, entlang welchem der Schwellwert zur Erzeugung der Modifikation überschritten wird.

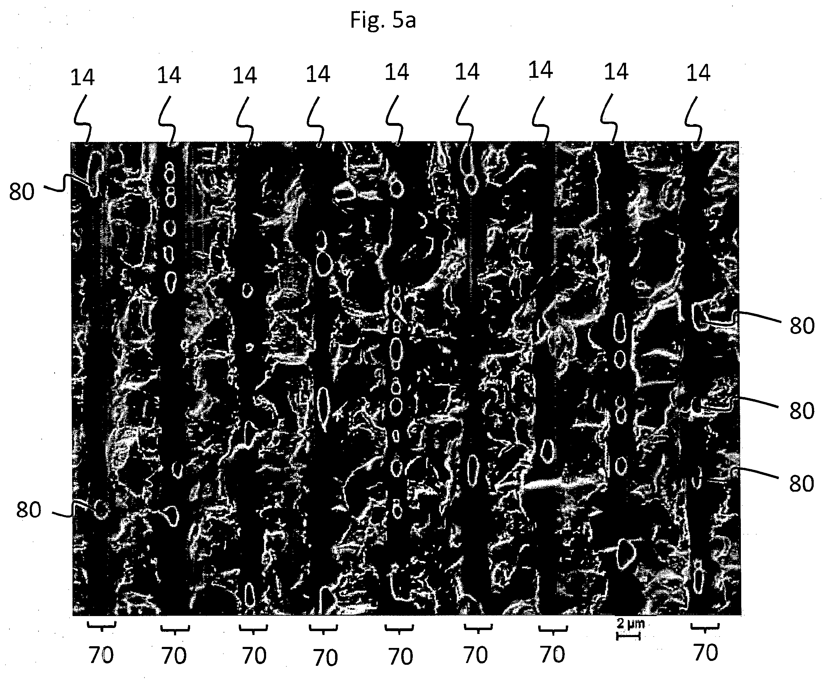

Fig. 5a zeigt eine REM-Aufnahme mehrerer (in der Figur von links nach rechts) nebeneinander angeordneter (und in der Figur von oben nach unten erstreckender) linienhafter Modifikationen 14, welche mit dem erfindungsgemäßen Verfahren bzw. in dem erfindungsgemäßen Kompositwerkstoff gebildet sind.

Die neun sichtbaren linienhaften Modifikationen 14 weisen einen Abstand von jeweils etwa 7 Mikrometer zueinander auf und wurden mit Laserpulsen in Form von Bursts und einer Bikonvexlinse (16mm) erzeugt, wobei folgende Prozessparameter verwendet wurden: 6 Burst, Burstfrequenzen: 50 MHz, Burst-Gesamtenergie: etwa 500 µJ, Burstform abnehmend, Pulsenergie des ersten Pulses etwa 170 µJ, 12mm Rohrstrahl 1/e², Wellenlänge: 1064 nm.

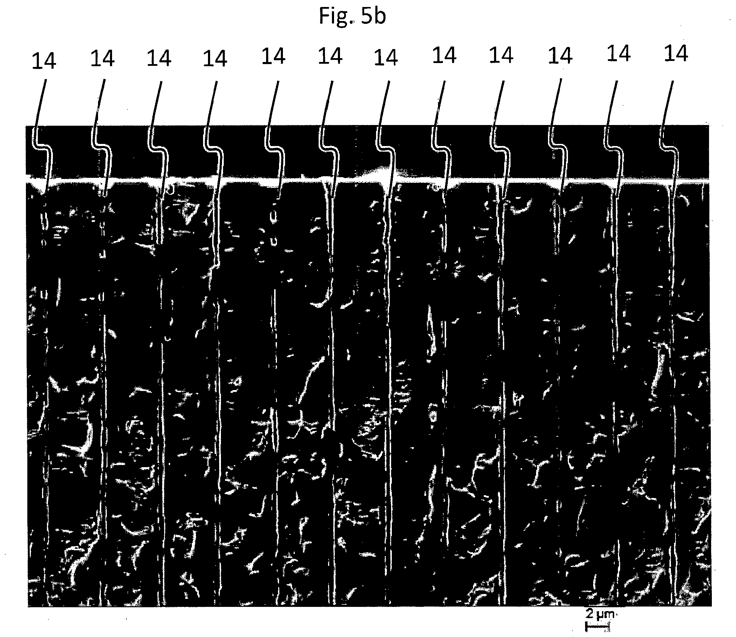

In der Fig. 5a ist zu erkennen, dass die linienhaften Modifikationen wesentlich breiter sind als z.B. in einem Borosilikatglas, welches zum Vergleich in Fig. 5b gezeigt ist und welches filamentartige Kanäle mit Durchmessern im Submikrometerbereich aufweist.

Eine linienhafte Modifikation oder ein Defekt einer linienhaften Modifikation kann demnach eine Breite, insbesondere eine mittlere Breite 70 aufweisen, die größer ist als 1µm, vorzugsweise größer ist als 2µm. Unter Breite ist dabei eine Ausdehnung senkrecht zur Erstreckung der linienhaften Modifikation zu verstehen.

Eine solche verhältnismäßig breite linienhafte Modifikation oder ein Defekt einer linienhaften Modifikation kann insbesondere als eine Schmelzzone ausgebildet sein. Es kann demnach um den Einwirkbereich des Lasers Material des Kompositwerkstoffs schmelzen und z.B. eine Phasenumwandlung erfahren.

Neben der verhältnismäßig breiten Einflusszonen ist der REM-Aufnahme der Fig. 5a auch zu entnehmen, dass die linienhaften Modifikationen entlang der ihrer Erstreckungsrichtung (entlang der Laserstrahlachse) bereichsweise von Blasenbildung begleitet sind. Bei den Blasen kann es sich insbesondere um Hohlräume (Voids) handeln, z.B. an den Phasengrenzen durch die bereits vorstehend beschriebene Feldstärkeüberhöhung. Es kann auch vorkommen, dass sich entlang der linienhaften Modifikationen ein zusätzlicher Filamentkanal ausbildet.

Eine linienhafte Modifikation kann demnach zumindest teilweise offene Bereiche 80, insbesondere porenförmige oder blasenförmige Bereiche aufweisen.

## Patentansprüche

1. Verfahren zur Erzeugung von Modifikationen in oder an einem transparenten Werkstück (2) mittels einer Laserbearbeitungsvorrichtung (1),
wobei eine Laserbearbeitungsvorrichtung (1) verwendet wird, die einen Kurzpuls- oder Ultrakurzpulslaser (10), der eine Laserstrahlung (12) mit einer Wellenlänge im Transparenzbereich des Werkstücks (2) ausstrahlt, und eine Strahlformungsoptik (11) zur Strahlformung, insbesondere zur Fokussierung der Laserstrahlung aufweist,
und wobei ein transparentes Werkstück (2) verwendet wird, das aus einem Material besteht, welches mehrere Phasen aufweist, von denen zumindest zwei Phasen unterschiedliche Dielektrizitätszahlen besitzen, von denen wiederum die eine Phase eine in Form von Partikeln eingeschlossene Phase ist, die von der anderen Phase im Wesentlichen umgeben ist,
und **dadurch gekennzeichnet, dass** :
das Produkt aus dem in Kubiknanometern angegebenen Volumen der Partikel und dem Verhältnis des Betrages der Differenz der zwei unterschiedlichen Dielektrizitätszahlen zu der Dielektrizitätszahl der umgebenden Phase größer als 500, vorzugsweise größer als 1000, besonders bevorzugt größer als 2000 ist.

2. Verfahren nach Anspruch 1, wobei entlang einer Linie (20) nebeneinander aufgereihte linienhafte Modifikationen (14) in dem transparenten Werkstück (2) erzeugt werden, indem die Laserstrahlung (12) relativ bezüglich des Werkstücks (2) entlang der Linie (20) bewegt wird und zeitlich nacheinander Laserpulse entweder als Einzelpulse oder in Form von Bursts abgegeben werden, wobei jeder dieser Einzelpulse oder Bursts zur Erzeugung jeweils einer der linienhaften Modifikationen (14) dient.

3. Verfahren nach Anspruch 2, **dadurch gekennzeichnet, dass** die Länge der linienhaften Modifikation (14) über die Höhe der Pulsenergie eingestellt wird.

4. Verfahren nach einem der vorhergehenden Ansprüche, **dadurch gekennzeichnet dass** eine Optik zur Fokussierung der Laserstrahlung verwendet wird, welche den Fokus in Ausbreitungsrichtung räumlich so verlängert, dass die Maximalintensität der Laserstrahlung kleiner ist als 150 %, vorzugsweise 130 % des Schwellwertes der Intensität, ab welchem das Material modifiziert wird.

5. Verfahren gemäß einem der vorstehenden Ansprüche, **dadurch gekennzeichnet, dass** die Laserstrahlung so fokussiert wird, dass das Verhältnis des Längenbereichs, entlang welchem die Intensität mindestens 110% des Schwellwerts der Modifikation ist, zum Längenbereich, entlang welchem die Intensität mindestens 10% des Schwellwerts ist, mindestens 0,4, vorzugsweise mindestens 0,5, besonders bevorzugt mindestens 0,7 beträgt.

6. Verfahren nach einem der Ansprüche 2 bis 5, **dadurch gekennzeichnet, dass** die linienhafte Modifikationen (14) jeweils aus mehreren entlang eines Kanals angeordneten Defekten gebildet werden, wobei die Längen der Defekte mit zunehmendem Abstand von einer Oberfläche des Werkstücks (2) zunehmen.

7. Verfahren nach Anspruch 1, wobei Modifikationen im Inneren des transparenten Werkstücks (2) erzeugt werden, indem die Parameter des Kurzpuls- oder Ultrakurzpulslasers so eingestellt werden, dass Beschädigungen an der Oberfläche des transparenten Werkstücks (2) vermieden werden.

8. Verfahren nach einem der vorhergehenden Ansprüche, **dadurch gekennzeichnet, dass** es sich bei dem Material um Glaskeramik oder einen Kompositwerkstoff handelt.

9. Verfahren nach einem der vorhergehenden Ansprüche, **dadurch gekennzeichnet, dass** ein Material verwendet wird, dessen Partikel einen Median der Partikelgrößen von 6 nm oder mehr aufweisen.

10. Kompositwerkstoff, insbesondere Glaskeramik oder Polymerwerkstoff, enthaltend Bereiche einer ersten Phase mit einer Dielektrizitätszahl εᵣ₁, Bereiche wenigstens einer zweiten Phase mit einer Dielektrizitätszahl εᵣ₂, welche Dielektrizitätszahlen εᵣ₁ und εᵣ₂ voneinander abweichen,
**dadurch gekennzeichnet, dass** :
das Produkt aus dem in Kubiknanometern angegebenen Volumen eines Bereichs der wenigstens einen zweiten Phase und dem um eins verminderten Verhältnis der Dielektrizitätszahlen der ersten Phase und der wenigstens einen zweiten Phase größer als fünfhundert, vorzugsweise größer als eintausend, besonders bevorzugt größer als zweitausend ist, wobei die Dielektrizitätszahl der ersten Phase εᵣ₁ größer gleich der Dielektrizitätszahl der wenigstens einen zweiten Phase εᵣ₂ ist, und wobei wenigstens eine aus Defekten gebildete linienhafte Modifikation, die einen mindestens 500 Mikrometer langen Kanal von Defekten darstellt, im Inneren des Kompositwerkstoffs verläuft.

11. Kompositwerkstoff nach Anspruch 10, **dadurch gekennzeichnet, dass** Bereiche der wenigstens einen zweiten Phase voneinander beabstandet vorliegen.

12. Kompositwerkstoff nach Anspruch 10 oder 11, **dadurch gekennzeichnet, dass** die wenigstens eine zweite Phase im Wesentlichen kugelförmig ausgebildet ist.

13. Kompositwerkstoff nach einem der Ansprüche 10 bis 12, **dadurch gekennzeichnet, dass** die Länge der wenigstens einen linienhaften Modifikation bzw. Gesamtdefektlänge 100 bis 10000 Mikrometer, vorzugsweise 1000 bis 10000 Mikrometer, besonders bevorzugt 3000 bis 10000 Mikrometer beträgt.

14. Kompositwerkstoff nach einem der Ansprüche 10 bis 13, **dadurch gekennzeichnet, dass** das Verhältnis der ersten und zweiten Dielektrizitätszahl (εᵣ₁/εᵣ₂) größer gleich 1,1 ist.

15. Kompositwerkstoff nach einem der Ansprüche 10 bis 14, **dadurch gekennzeichnet, dass** die wenigstens eine aus Defekten gebildete linienhafte Modifikation aus mehreren entlang eines Kanals angeordneten Defekten gebildet ist, wobei die Längen der Defekte mit zunehmenden Abstand von einer Oberfläche des Kompositwerkstoffs zunehmen.

## Claims

1. A method for producing modifications in or on a transparent workpiece (2) using a laser processing device (1),
wherein a laser processing device (1) is used which comprises a short pulsed laser or ultrashort pulsed laser (10) that emits a laser radiation (12) with a wavelength in the transparency range of the workpiece (2), and which includes a beam shaping optical unit (11) for beam shaping, in particular for focusing the laser radiation;
and wherein a transparent workpiece (2) is used which consists of a material that has a plurality of phases, wherein at least two phases thereof have different dielectric constants and wherein one phase thereof, in turn, is a phase that is embedded in the form of particles and is substantially surrounded by the other phase;
and **characterized in that**:
the product of the volume of the particles, specified in cubic nanometres, and the ratio of the absolute value of the difference of the two different dielectric constants to the dielectric constant of the surrounding phase is greater than 500, preferably greater than 1000, more preferably greater than 2000.

2. The method according to claim 1, wherein a series of adjacent linear modifications (14) is generated in the transparent workpiece (2) along a line (20) by moving the laser radiation (12) relative to the workpiece (2) along said line (20) and by successively emitting laser pulses over time, either as individual pulses or in the form of bursts, wherein each of said individual pulses or bursts is used to produce a respective one of said linear modifications (14).

3. The method according to claim 2, **characterized in that** the length of the linear modification (14) is adjusted though the level of pulse energy.

4. The method according to any one of the preceding claims, **characterized in that** an optical unit is used for focusing the laser radiation, which spatially extends the focus in the propagation direction such that the maximum intensity of the laser radiation is less than 150 %, preferably 130 % of the threshold value of the intensity above which the material is modified.

5. The method according to any one of the preceding claims, **characterized in that** the laser radiation is focused such that the ratio of the length range along which the intensity is at least 110 % of the modification threshold value to the length range along which the intensity is at least 10 % of the threshold value is at least 0.4, preferably at least 0.5, more preferably at least 0.7.

6. The method according to any one of claims 2 to 5, **characterized in that** each of the linear modifications (14) is defined by a plurality of defects arranged along a channel, wherein the lengths of the defects increase with increasing distance from a surface of the workpiece (2).

7. The method according to claim 1, wherein modifications are produced inside the transparent workpiece (2) by adjusting the parameters of the short pulsed laser or ultrashort pulsed laser so as to avoid damage to the surface of the transparent workpiece (2).

8. The method according to any one of the preceding claims, **characterized in that** the material is a glass ceramic or a composite material.

9. The method according to any one of the preceding claims, **characterized in that** a material is used whose particles have a median of particle sizes of 6 nm or more.

10. A composite material, in particular a glass ceramic or polymer material, comprising regions of a first phase having a dielectric constant εᵣ₁, regions of at least one second phase having a dielectric constant εᵣ₂, which dielectric constants εᵣ₁ and εᵣ₂ differ from each other, **characterized in that**:
the product of the volume, specified in cubic nanometres, of a region of the at least one second phase and the ratio of the dielectric constants of the first phase and the at least one second phase reduced by the value of one is greater than five hundred, preferably greater than one thousand, more preferably greater than two thousand, wherein the dielectric constant of the first phase, εᵣ₁, is greater than or equal to the dielectric constant of the at least one second phase, εᵣ₂, and wherein at least one linear modification defined by defects and forming a channel of defects of at least 500 micrometres in length extends inside the composite material.

11. The composite material according to claim 10, **characterized in that** regions of at least one second phase are spaced apart from one another.

12. The composite material according to claim 10 or 11, **characterized in that** the at least one second phase is substantially spherical in shape.

13. The composite material according to any one of claims 10 to 12,
**characterized in that** the length of the at least one linear modification or the total defect length is 100 to 10,000 micrometres, preferably 1000 to 10,000 micrometres, more preferably 3000 to 10,000 micrometres.

14. The composite material according to any one of claims 10 to 13,
**characterized in that** the ratio of the first and second dielectric constants (εᵣ₁/εᵣ₂) is greater than or equal to 1.1.

15. The composite material according to any one of claims 10 to 14,
**characterized in that** the at least one linear modification formed by defects is defined by a plurality of defects arranged along a channel, wherein the lengths of the defects increase with increasing distance from a surface of the composite material.

## Revendications

1. Procédé permettant de générer des modifications dans ou sur une pièce (2) transparente, au moyen d'un dispositif d'usinage au laser (1),
selon lequel on utilise un dispositif d'usinage au laser (1) qui présente un laser à ondes courtes ou ultracourtes (10), émettant un rayonnement laser (12) avec une longueur d'onde comprise dans la plage de transparence de la pièce (2), et un système optique de formation de faisceau (11) destiné à former les faisceaux, notamment à la focalisation du rayonnement laser,
et selon lequel on utilise une pièce (2) transparente qui est constituée d'un matériau présentant plusieurs phases parmi lesquelles au moins deux phases présentent des constantes diélectriques différentes, dont au moins une phase est une phase renfermée sous forme de particules, qui est sensiblement entourée par l'autre phase,
et **caractérisé en ce que**
le produit du volume des particules, indiqué en nanomètres cubes, et du rapport de la valeur de la différence des deux constantes diélectriques différentes à la constante diélectrique de la phase enveloppante est supérieur à 500, de préférence supérieur à 1 000, et de manière particulièrement avantageuse supérieur à 2 000.

2. Procédé selon la revendication 1, selon lequel on génère dans la pièce (2) transparente des modifications linéaires (14) disposées les unes à côté des autres en une rangée le long d'une ligne (20), par le fait de déplacer le rayonnement laser (12) par rapport à la pièce (2), le long de la ligne (20), et d'émettre des impulsions laser successivement dans le temps, soit comme impulsions individuelles, soit sous forme de salve, où chacune de ces impulsions individuelles ou de ces salves sert à générer respectivement l'une des modifications linéaires (14).

3. Procédé selon la revendication 2, **caractérisé en ce que** la longueur de la modification linéaire (14) est réglée par le biais de la hauteur de l'énergie des impulsions.

4. Procédé selon l'une des revendications précédentes, **caractérisé en ce que** l'on utilise un système optique pour focaliser le rayonnement laser, lequel système prolonge le foyer dans l'espace, dans la direction de propagation, de manière à ce que l'intensité maximale du rayonnement laser soit inférieure à 150 %, de préférence à 130 %, de la valeur seuil de l'intensité, à partir de laquelle le matériau est modifié.

5. Procédé selon l'une des revendications précédentes, **caractérisé en ce que** le rayonnement laser est focalisé de manière à ce que le rapport entre la portion de longueur, le long de laquelle l'intensité correspond au moins à 110 % de la valeur seuil de la modification, et la portion de longueur, le long de laquelle l'intensité correspond au moins à 10 % de la valeur seuil, soit au moins de 0,4, de préférence au moins de 0,5, et de façon particulièrement avantageuse au moins de 0,7.

6. Procédé selon l'une des revendications 2 à 5, **caractérisé en ce que** les modifications linéaires (14) sont formées respectivement de plusieurs défauts disposés le long d'un canal, les longueurs des défauts augmentant à mesure que la distance par rapport à une surface de la pièce (2) augmente.

7. Procédé selon la revendication 1, selon lequel des modifications sont générées à l'intérieur de la pièce (2) transparente, par le fait que les paramètres du laser à impulsions courtes ou ultracourtes sont réglés de manière à éviter des endommagements à la surface de la pièce (2) transparente.

8. Procédé selon l'une des revendications précédentes, **caractérisé en ce que** le matériau est de la vitrocéramique ou un matériau composite.

9. Procédé selon l'une des revendications précédentes, **caractérisé en ce que** l'on utilise un matériau dont les particules présentent un médian des tailles de particules de 6 nm ou plus.

10. Matériau composite, en particulier une vitrocéramique ou un matériau polymère, comportant des zones d'une première phase avec une constante diélectrique εᵣ₁, des zones d'au moins une deuxième phase, avec une constante diélectrique εᵣ₂, lesquelles constantes diélectriques εᵣ₁ et εᵣ₂ sont différentes l'une de l'autre,
**caractérisé en ce que**
le produit du volume d'une zone, indiqué en nanomètres cubes, de la deuxième phase, au nombre d'au moins une, et du rapport, diminué de un, des constantes diélectriques de la première phase et de la deuxième phase, au nombre d'au moins une, est supérieur à cinq cents, de préférence supérieur à mille, et de manière particulièrement avantageuse supérieur à deux mille, la constante diélectrique de la première phase εᵣ₁ étant supérieure ou égale à la constante diélectrique de la deuxième phase εᵣ₂, au nombre d'au moins une, et au moins une modification linéaire, qui est formée de défauts et constitue un canal de défauts d'une longueur d'au moins 500 micromètres, s'étendant à l'intérieur du matériau composite.

11. Matériau composite selon la revendication 11, **caractérisé en ce que** des zones de la deuxième phase, au nombre d'au moins une, sont espacées les unes des autres.

12. Matériau composite selon la revendication 10 ou 11, **caractérisé en ce que** la deuxième phase, au nombre d'au moins une, est réalisée sous une forme sensiblement sphérique.

13. Matériau composite selon l'une des revendications 10 à 12, **caractérisé en ce que** la longueur de la modification linéaire, au nombre d'au moins une, ou la longueur totale des défauts est de 100 à 10 000 micromètres, de préférence de 1 000 à 10 000 micromètres, et de manière particulièrement avantageuse de 3 000 à 10 000 micromètres.

14. Matériau composite selon l'une des revendications 10 à 13, **caractérisé en ce que** le rapport entre la première et la deuxième constante diélectrique (εᵣ₁/εᵣ₂) est supérieur ou égal à 1,1.

15. Matériau composite selon l'une des revendications 10 à 14, **caractérisé en ce que** la modification linéaire, constituée de défauts, se compose de plusieurs défauts disposés le long d'un canal, les longueurs des défauts augmentant à mesure que la distance par rapport à une surface du matériau composite augmente.
